# EUROPÄISCHE PATENTSCHRIFT

(11) **EP 3 129 441 B1**
(45) Veröffentlichungstag und Bekanntmachung des Hinweises auf die Patenterteilung: **29.04.2020**
(21) Anmeldenummer: 15717090.3
(22) Anmeldetag: 01.04.2015
(51) Int. Cl.: C09J 4/00, C08K 3/00, C08K 5/00

(54) **CH-ACIDE VERBINDUNGEN UND METALLSALZE ALS HÄRTERSYSTEM, ENTSPRECHENDE HARZZUSAMMENSETZUNGEN UNTER ANDEREM FÜR DIE BEFESTIGUNGSTECHNIK**
CH-ACID COMPOUNDS AND METAL SALTS AS HARDENER SYSTEM, CORRESPONDING RESIN COMPOSITIONS FOR, AMONGST OTHER THINGS IN FASTENING TECHNOLOGY
COMPOSÉS CH-ACIDE ET SELS MÉTALLIQUES UTILISABLES COMME SYSTÈME DURCISSEUR ET COMPOSITIONS DE RÉSINES CORRESPONDANTES, DESTINÉES ENTRE AUTRES À LA TECHNOLOGIE DE LA FIXATION

(30) Priorität: 11.04.2014 DE 102014105202; 13.03.2015 DE 102015003221
(43) Veröffentlichungstag der Anmeldung: 15.02.2017
(73) Patentinhaber: fischerwerke GmbH & Co. KG, 72178 Waldachtal (DE)
(72) Erfinder: VOGEL, Martin, 79286 Glottertal (DE); SCHLENK, Christian, 79211 Denzllingen (DE); WEINELT, Christian, 79312 Emmendingen (DE)
(86) Internationale Anmeldenummer: PCT/EP2015/000713
(87) Internationale Veröffentlichungsnummer: WO 2015/154861

(56) Entgegenhaltungen:
- EP-A1- 2 492 329
- DE-A1-102011 078 785
- US-A- 5 166 117
- US-A- 6 051 626
- US-A1- 2009 105 367
- US-A1- 2013 281 566

## Beschreibung

Die Erfindung betrifft die Verwendung eines Härtersystems zur Herstellung einer Kunstharzzusammensetzung und die Weiterverwendung der Kunstharzzusammensetzung zur Befestigung on Verankerungsmitteln in Substraten und weitere Erfindungsgegenstände, wie jeweils in den unabhängigen oder insbesondere davon abhängigen Ansprüchen dargelegt..

Die DE 10 2011 078 785 A1 nennt Härterzusammensetzungen für Mehrkomponenten-Mörtelsysteme, welche 1,3-Dioxoverbindungen als Härter und eine Mangan-Verbindung als Co-Initiator, die als Ersatz für sonst übliche auf Peroxiden und ggf. tertiären Aminen basierende Härtersysteme, einsetzbar sein sollen. Dies ermöglicht den Verzicht auf die Peroxide, die beispielsweise wegen ihrer sensibilisierenden Wirkung gemieden werden sollten. Hier werden Dicarbonylverbindungen genannt, bei denen zwischen zwei Carbonylgruppen ein Kohlenstoffatom liegt, das genau ein Wasserstoffatom und einen Rest außer Wasserstoff trägt.

Aufgrund ökologischer Erfordernisse und beispielsweise der Tatsache, dass Peroxide in vielen Ländern ab einer bestimmten Konzentration als sensibilisierend gekennzeichnet werden müssen (z.B. bei Dibenzoylperoxid ab 1%), sollte es angestrebt werden, derartige Initiatoren zu meiden.

US 2013/0281566 A1 nennt Barbitursäurederivate als Polymerisationsinitiatoren, bedarf jedoch als essentieller Komponenten ein Alkali- und/oder Erdalkalihalogenid sowie ein Ethergrupopen aufweisendes Komplexierungsagens. Die dortigen Zusammensetzungen dienen als Knochenzemente oder im Dentalbereich und dergleichen.

US 6,051,626 beschreibt eine Zusammensetzung für Anwendungen im dentalen oder chirurgischen Bereich, Dentalzusammensetzung mit Photoinitiatoren ohne Diketongruppen. US 2009/0105367 A1 nennt ein Initiatorsystem für selbsthärtende Kunststoffe, welches Barbitursäurederivate umfasst, bedarf des Zusatzes von Metallhalogeniden und die Verwendung von medizinischem Kunststoffmaterial und dentalen Materialien.

US 5,166,117 beschreibt bestimmte Barbitursäureverbindungen als Polymerisationsinitiatoren an Oberflächen, die in der Zahnheilkunde verwendet werden.

EP 2 492 329 A1 zeigt radikalisch härtbare Kunstharze, die Peroxide als Härter aufweisen müssen und Verbindungen, die in erster Linie als Beschichtungen beschrieben werden.

es bestand die Aufgabe, neue Härter- bzw. Harzzusammensetzungen bereit zu stellen, welche geeignete Festigkeiten und Verwendbarkeit für die eingangs genannten Zwecke ermöglichen, sowie gegebenenfalls weitere Vorteile aufweisen, und neue Verwendungen solcher und verwandter Harzzusammensetzungen zu ermöglichen.

Im Gegensatz zur Lehre aus DE 10 2011 078 785, wo beschrieben wurde, dass 1,3-Dioxoverbindungen, die in 2-Position eine Methylengruppe haben, nicht zu einer Härtung der Grundharze und Harzmischungen geführt haben sollen, wurde gefunden, dass die beanspruchten Verbindungen durchaus gut funktionieren können. Zu weiteren Vorteilen zählen, dass keine sicherheitsrelevanten Einschränkungen bezüglich Transport und Lagerung der Komponenten und keine Kennzeichnung als brandfördernd nötig sind und ein Verzicht auf den Einsatz von Phlegmatisierungsmitteln möglich ist.

Es wurde nun gefunden, dass auch bei Verwendung bestimmter unten näher definierter CHacider Verbindungen *ohne* zusätzliche Radikalbildner, also Initiatoren im engeren Sinne (z.B. ohne Peroxide (was auch Perester, Persäuren und dergleichen einschließt), ohne Azoverbindungen und ohne Photoinitiatoren für eine Härtungsauslösung durch sichtbares oder UV-Licht, oder Kombinationen von zwei oder mehr davon), wie sie sonst in radikalisch zu härtenden Harzen Anwendung finden, in Gegenwart von als Trocknungsmitteln bekannten Metallsalzen als Co-Kettenstarter/Aktivator Radikale gebildet werden können, welche anstelle von bisher üblichen Radikalbildnern (Initiatoren/Initiatorsystemen) eine Polymerisation von nichtaromatischen Doppelbindungen, z.B. olefinischen Doppelbindungen, beispielsweise Acrylaten oder Methacrylaten, auslösen können und eine Anwendung entsprechender Harze in der Befestigungstechnik im Baubereich ermöglichen.

Die Erfindung betrifft vor diesem Hintergrund in einer ersten Erfindungsverkörperung die Verwendung eines Härtersystems zur Herstellung einer (nachstehend auch als erfindungsgemäß weiter verwendet bezeichneten) Kunstharzzusammensetzung und Weiterverwendung der Kunstharzzusammensetzung zur Befestigung von Verankerungsmitteln in Substraten, wobei es sich bei dem Härtersystem um ein solches für eine Kunstharzzusammensetzung mit radikalisch polymerisierbaren Verbindungen handelt, welches die folgenden Bestandteile beinhaltet:
a) mindestens einen Aktivator in Form eines Metallsalzes und
b) als Radikalkettenstarter mindestens eine CH-acide Verbindung der Formel I beinhaltet, 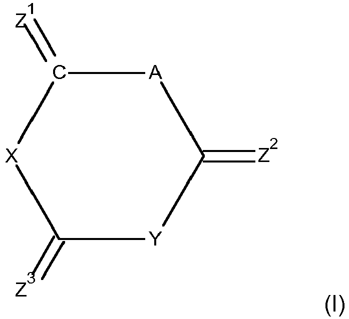 worin
   (i)
      -A- für -C(R¹)(R²)- steht
      -X- für eine Bindung, für -NR³- oder für -(CR⁴R⁵)ₚ- steht, oder für -O- steht,
      Y für NR⁶ oder für (CR⁷R⁸)_{q} steht, oder für O steht,
      wobei wenn X für O steht auch Y für O steht;
      wobei vorzugsweise X für (CR⁴R⁵)ₚ steht und Y für CR⁷R⁸ steht,
      oder X für NR³ und Y für NR⁶ steht;
      Z¹ für O, S, S=O oder S(=O)₂ steht,
      Z² für O, S, S=O oder S(=O)₂ steht,
      Z³ für O, S, S=O oder S(=O)₂ oder für R⁹ und R¹⁰ steht,
      p für 1, 2 oder 3 steht, vorzugsweise für 1 oder 2
      q für 1, 2 oder 3 steht, vorzugsweise für 1;
      und die Reste R¹, R², R³, R⁴, R⁵, R⁶, R⁷ R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen; vorzugsweise ausgewählt aus O, N, wie NH oder N-Alkyl, und S) aufweisen, mit der Maßgabe, dass mindestens einer der Reste R¹ und R² Wasserstoff bedeutet, oder
   (ii) offenkettige Verbindungen,
      worin das die Brücke bildende Glied -C(=Z³)- fehlt,
      -A- für -C(R¹)(R²)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁₋C₄-Alkylcarbonylmethylgruppe stehen,
      R¹ und R² beide Wasserstoff bedeuten und
      Z¹ und Z² die genannten Bedeutungen haben;
      oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht,
      Y und Z² gemeinsam mit dem bindenden Kohlenstoffatom -CN bedeuten,
      Z¹ die oben genannten Bedeutungen hat, und
      R¹ und R² jeweils wie oben definiert sind mit der Maßgabe, dass mindestens einer der Reste Wasserstoff bedeutet;
      und/oder Salze davon.

In einer spezifischen Ausführungsform der Erfindung kann vorgesehen sein, dass es sich bei der CH-aciden Verbindung der Formel I um mindestens eine der in Gruppe (i) genannten oder ein Salz davon handelt mit der Maßgabe, dass Y für NR⁶ und X für NR³ steht und/oder mit der Maßgabe, dass Y für (CR⁷R⁸)_{q} und/oder O und X für (CR⁴R⁵)p und/oder O und/oder für eine Bindung und Z³ für R⁹ und R¹⁰ muss nicht zwingend Wasserstoff sein (z.B.: 5,5-Dimethyl-1,3-cyclohexandion) steht.

Des Weiteren kann es vorteilhaft sein, wenn es sich bei der CH-aciden Verbindung der Formel I um mindestens eine ausgewählt aus der Gruppe bestehend aus Barbitursäure, 1-Benzyl-5-phenylbarbitursäure, 5-Butylbarbitursäure, 1-Cyclohexyl-5-ethylbarbitursäure, 2-Thiobarbitursäure und/oder einem Salz und/oder um mindestens eine ausgewählt aus der Gruppe bestehend aus 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion, 2,2,5-Trimethyl-1,3-dioxan-4,6-dion und/oder einem Salz davon handelt.

In einer spezifischen Ausführungsform der Erfindung kann es vorgesehen sein, dass es sich bei der CH-aciden Verbindung der Formel I um mindestens eine der in Gruppe (i) genannten oder ein Salz davon handelt mit der Maßgabe, dass Y für (CR⁷R⁸)_{q} und/oder O und X für (CR⁴R⁵)ₚ und/oder O und/oder für eine Bindung und Z³ für R⁹ und R¹⁰ steht und/oder es sich bei der CH-aciden Verbindung der Formel I um mindestens eine der in Gruppe (ii) genannten oder ein Salz davon handelt mit der Maßgabe, dass das die Brücke bildende Glied -C(=Z³)-fehlt und -A-für-C(R¹)(R²)- steht.

Des Weiteren kann es vorteilhaft sein, wenn es sich bei der CH-aciden Verbindung der Formel I um mindestens eine ausgewählt aus der Gruppe bestehend aus 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion, 2,2,5-Trimethyl-1,3-dioxan-4,6-dion und/oder einem Salz davon und/oder um mindestens eine ausgewählt aus der Gruppe bestehend aus 3-Oxoglutarsäure und deren Ester und/oder einem Salz davon.

Die Erfindung betrifft auch ein Härtersystem für eine Kunstharzzusammensetzung mit radikalisch polymerisierbaren Verbindungen, welches die Bestandteile
a) mindestens einen Aktivator in Form eines Metallsalzes und
b) als Radikalkettenstarter mindestens eine CH-acide Verbindung der Formel I, 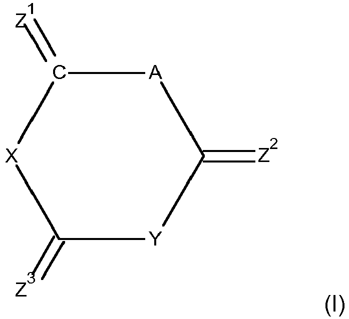 worin
   (i)
      -A-für-C(R¹)(R²)-steht
      -X-für-(CR⁴R⁵)ₚ-steht,
      Y für CR⁷R⁸ steht,
      Z¹ für O, S, S=O oder S(=O)₂ steht,
      Z² für O, S, S=O oder S(=O)₂ steht,
      Z³ für O, S, S=O oder S(=O)₂ oder für R⁹ und R¹⁰ steht,
      p für 1, 2 oder 3 steht, vorzugsweise für 1 oder 2,
      q für 1, 2 oder 3 steht, vorzugsweise für 1;
      und die Reste R¹, R², R⁴, R⁵, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome aufweisen, mit der Maßgabe, dass mindestens einer der Reste R¹ und R² Wasserstoff bedeutet,
      oder
   (ii) offenkettige Verbindungen,
      worin das die Brücke bildende Glied -C(=Z³)- fehlt,
      -A- für-C(R¹)(R²)- steht,
      X und Y unabhängig voneinander für eine jeweils unverzweigte oder verzweigte, unsubstituierte oder substituierte, gegebenenfalls Heteroatome aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe stehen,
      R¹ und R² beide Wasserstoff bedeuten und
      Z¹ und Z² die genannten Bedeutungen haben;
      oder X für eine jeweils unverzweigte oder verzweigte, unsubstituierte oder substituierte, gegebenenfalls Heteroatome aufweisende C₁-C₄-Alkylgruppe oder C₁-C₄-Alkoxygruppe oder C₁-C₄-Alkoxycarbonylmethyl-gruppe oder C₁-C₄-Alkylcarbonylmethylgruppe steht,
      Y und Z² gemeinsam mit dem bindenden Kohlenstoffatom -CN bedeuten,
      Z¹ die oben genannten Bedeutungen hat; und
      R¹ und R² jeweils wie oben definiert sind mit der Maßgabe, dass mindestens einer der Reste Wasserstoff bedeutet;
      und/oder Salze davon,
   beinhaltet,
   wobei das Härtersystem frei ist von zugesetzten Peroxiden, Azoverbindungen oder Photoinitiatoren.

Das genannte Härtersystem kann als fertige Härterzusammensetzung (beispielsweise mit mikroverkapselten Komponenten a) und b) vorliegen oder vorzugsweise erst bei der Mischung mit weiteren Komponenten einer Kunstharzzusammensetzung (gewissermaßen als Zusammensetzung (Mischung)) ausgeformt werden, beispielsweise bei der Verwendung.

Eine weitere und besonders hervorzuhebende Ausführungsform der Erfindung betrifft eine Kunstharzzusammensetzung, frei von zugesetzten Peroxiden, Azoverbindungen oder Photoinitiatoren, beinhaltend die Bestandteile
a) mindestens einen Aktivator in Form eines Metallsalzes
b) als Radikalkettenstarter mindestens eine CH-acide Verbindung der Formel I wie oben für das Härtersystem und in Anspruch 7 definiert; und
c) mindestens eine radikalisch polymerisierbare Verbindung.

Die Kunstharzzusammensetzung wird dabei insbesondere als Klebstoff, Beschichtungsstoff oder Formmasse, insbesondere zur Befestigung von Verankerungsmitteln in Substraten, wie Mauerwerk oder Beton, oder ferner zur Befestigung von Fasern, Gelegen, Geweben oder Composites zur Verstärkung von Bauwerken, verwendet, so dass insbesondere die (Weiter-) Verwendung des Härtersystems vorzugsweise als Komponente einer solchen Kunstharzzusammensetzung wie gerade genannt für die genannten Zwecke erfolgt.

Insbesondere betrifft die Erfindung die Verwendung der erfindungsgemäßen oder erfindungsgemäß weiter verwendeten Kunstharzzusammensetzung als Klebstoff, insbesondere zur Befestigung von Verankerungsmitteln in Substraten, wie Mauerwerk oder Beton, oder zur Befestigung von Fasern, Gelegen, Geweben oder Composites zur Verstärkung von Bauwerken.

Insbesondere betrifft die Erfindung die Verwendung der erfindungsgemäßen oder erfindungsgemäß weiter verwendeten Kunstharzzusammensetzung als Beschichtungsstoff oder Formmasse.

Ausführungsformen der Erfindung finden sich auch in den Ansprüchen, die hier durch Bezugnahme aufgenommen werden.

Weiter betrifft die vorliegende Offenbarung für Referenzzwecke auch ein Verfahren zur Initiierung von radikalischen Reaktionen eines nichtaromatische ungesättigte Gruppen beinhaltenden Kunstharzes, bei dem mittels (insbesondere durch Zusatz) eines Härtersystems wie vor- oder nachstehend beschrieben die für die radikalische Reaktion erforderlichen initiierenden Radikale gebildet werden, erfindungsgemäß insbesondere zu einer der vor- und nachstehend genannten Verwendungen.

Vor- und nachstehend können allgemeinere Begriffe oder Merkmale durch jeweils spezifischer (insbesondere nachfolgend) genannte Definitionen einzeln, zu mehreren oder alle ersetzt werden, was zu spezifischen, insbesondere bevorzugten, Ausführungsformen der Erfindung führt.

Wo "ein" oder "eine" verwendet wird, ist dies (sofern nicht anders, beispielsweise durch Voranstellen von "mindestens", ersichtlich) in erster Linie als der unbestimmte Artikel zu verstehen und beinhaltet "ein (in Zahlen: 1) oder mehrere" wie auch nur ein(e) (in Zahlen: 1). Anders ausgedrückt, bedeutet "ein" oder "eine" "ein(e) oder mehr, z.B. zwei oder drei oder vier".

Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe einer erfindungsgemäßen bzw. erfindungsgemäß verwendeten Harzzusammensetzung (ohne Verpackungsmaterial), wenn nicht anders angegeben oder ersichtlich.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

Unter "Harzzusammensetzung" ist eine Kunstharzzusammensetzung zu verstehen, der Kürze halber wird der Ausdruck "Harzzusammensetzung" weitgehend verwendet.

Gegenüber vor- und nachstehend genannten Gruppen, die Heteroatome (anstelle von C-Atomen; vorzugsweise ausgewählt aus O, N, wie NH oder N-Alkyl, und S) aufweisen, sind andere Gruppen ohne solche Heteroatome bevorzugt.

In allen Ausführungsformen der Erfindung ist vorzugsweise auf jeglichen Zusatz (Beimischen) von Peroxiden als solchen, Aziden, Azoverbindungen und Photoinitiatoren, bei den erfindungsgemäßen Härtersystemen und Kunstharzzusammensetzungen als solchen obligatorisch, verzichtet, d.h. die Erfindungsgegenstände kommen ohne solche weiteren peroxidischen Verbindungen oder ohne Peroxide, Azide, Azoverbindungen und Photoinitiatoren) aus (sie sind frei davon). Dabei ist nicht ausgeschlossen, dass vereinzelt Peroxide während der Lagerung oder der Reaktion beiläufig entstehen (beispielsweise auch durch Umsetzung mit Luftsauerstoff), doch erfolgt kein aktiver Zusatz von außen.

"Initiatoren" im Sinne des Stands der Technik sind dabei Radikalbildner, wie erwähnt. Beispiele für solche Peroxide sind z.B. Alkylhydroperoxide, Dialkylperoxide, Peracetale, Perketale, Persäuren, Aldehydperoxide und Ketonperoxide; Peroxycarbonate, Peroxyester, Diacylperoxide, und dergleichen mehr, insbesondere wie in WO 2007/042199 und US 2002/0091214 genannt. Beispiele für solche nicht peroxidische Verbindungen sind z.B. Azoverbindungen wie AIBN und Tetrazene.

Die Verbindungen der Formel I sind bekannt, nach an sich bekannten Verfahren herstellbar (beispielsweise analog den genannten) und/oder kommerziell erhältlich.

Barbitursäureverbindungen der Formel I können beispielsweise wie in E. Fischer und A. Dilthey: "Über o-Dialkylbarbitursäuren und über die Ureide der Dialkylsäuren", Ann. 335 (1904), S. 335, beschrieben durch alkalische Kondensation ggf. substituierter Malonsäuredieester mit N-substituiertem Harnstoff in Natriumalkoholat hergestellt werden, wobei entstehende Natriumsalze mit geeigneten Säuren neutralisiert werden können (beispielsweise den oben genannten) und so die freien CH-aciden Verbindungen hergestellt werden können. Alternativ kann eine Synthese wie in oder analog zu A.C. Cope et al., 1,3-Dimethyl-5-alkyl Barbituric Acids, J. Amer. Chem. Soc. 63, 365 (1941) beschrieben erfolgen.

Verbindungen mit Carbonylgruppen können mittels Schwefel einführender Reagentien, wie "Lawesson's reagent" (Lawessons Reagenz) in die entsprechenden Thiocarbonylverbindungen überführt werden, aus denen die entsprechenden C(=S=O) oder C(=S(=O)₂-Verbindungen beispielsweise durch Oxidation (beispielsweise mit Peroxiden) zugänglich gemacht werden können.

Beispiele für kommerzielle Quellen sind wie folgt:
1,3-Cyclohexandion: Alfa Aesar (Alfa Aesar GmbH & Co KG, Karlsruhe, Deutschland) 2-Methyl-1,3-cyclohexandion, Alfa Aesar
1,3-Cyclopentandion Alfa Aesar
2-Methyl-1,3-cyclopentandion Alfa Aesar
4,4-Dimethyl-1,3-cyclohexandion Livchem (Livchem Logistics GmbH, Frankfurt/Main, Deutschland),
5,5-Dimethyl-1,3-cyclohexandion (Dimedon) Sigma-Aldrich (Sigma-Aldrich Chemie GmbH, Taufkirchen, Deutschland)
2,2-Dimethyl-1,3-dioxan-4,6-dion Sigma Aldrich
2,2,5-Trimethyl-1,3-dioxan-4,6-dion Sigma Aldrich
Barbitursäure Alfa Aesar
1-Benzyl-5-phenylbarbitursäure Alfa Aesar
5-Butylbarbitursäure ChemBo Pharma Co., Ltd., China
5-Isopropylbarbitursäure Alfa Aesar
1-Cyclohexyl-5-ethylbarbitursäure Alfa Aesar
2-Thiobarbitursäure Alfa Aesar
Acetondicarbonsäuredimethylester Alfa Aesar
Diethyl-1,3-acetondicarboxylat Livchem
Ethylcyanoacetat Sigma Aldrich
Methylcyanoacetat IS Chemical Technology, Shangai, China
2-Ethylhexylcyanoacetat TCl Deutschland GmbH, Eschborn, Deutschland

Freie Verbindungen der Formel I können nach bekannten Verfahren in die entsprechenden Salze überführt werden, beispielsweise durch Behandlung mit Basen, wie Alkalimetallhydroxiden, z.B. Natrium- oder Kaliumhydroxid, durch Behandlung mit Kationenaustauschern, die salzbildende Kationen beinhalten, oder dergleichen.

Die entsprechenden Verfahren und kommerziellen und anderen Quellen sind dem Fachmann bekannt.

Bei der mindestens einen radikalisch polymerisierbaren Verbindung handelt es sich um eine nichtaromatische ungesättigte Gruppen beinhaltende Verbindung, vorzugsweise um ein radikalisch härtendes ungesättigtes Reaktionsharz mit bevorzugt mindestens 2 oder mehr reaktiven nichtaromatischen ungesättigten Bindungen oder eine Mischung von zwei oder mehr Reaktionsharzen.

Als radikalisch härtendes Reaktions- oder Kunstharz sind erfindungsgemäß ethylenisch ungesättigte Verbindungen und Verbindungen mit Kohlenstoff-Kohlenstoff-Dreifachbindungen geeignet.

Besonders geeignet ist die Gruppe der ethylenisch ungesättigten Verbindungen, die Styrol und Derivate, Vinylester , wie (Meth)Acrylate oder Urethan(meth)acrylate oder Itaconate, ferner ungesättigte Polyester, Vinylether, Allylether, Dicyclopentadien-Verbindungen und ungesättigte Fette, umfasst.

Besonders bevorzugt sind vor allem ein oder mehrere solche Harze, die (radikalisch) härtbare Ester mit ein oder mehreren ungesättigten Carbonsäureresten umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate; Epoxy(meth)acrylate, insbesondere in Form von Umsetzungs-produkten von Di- oder Polyepoxiden, z.B. Bisphenol-A-, Bisphenol-F- oder Novolak-di- und/oder-poly-glycidylethern, mit ungesättigten Carbonsäuren, z.B. C₂-C₇-Alkencarbonsäuren, wie insbesondere (Meth)acrylsäure; Urethan- und/oder Harnstoff(meth)acrylate (was auch oligo- oder polymere Varianten einschließt); oder ungesättigte Polyester¬harze, oder dergleichen, oder zwei oder mehr dieser härtbaren ungesättigten organischen Komponenten; beispielsweise in einem Gewichtsanteil von 0,1 bis 90 Gew.-%, z.B. zwischen 0,5 und 75 Gew.-% oder zwischen 1 und 40 Gew.-% oder insbesondere von 15 bis 60, beispielsweise 20 bis 50 Gew.-%.

Beispiele für in besonderen Ausführungsformen der Erfindung vorhandene bzw. verwendete Epoxy(meth)acrylate sind solche der Formel 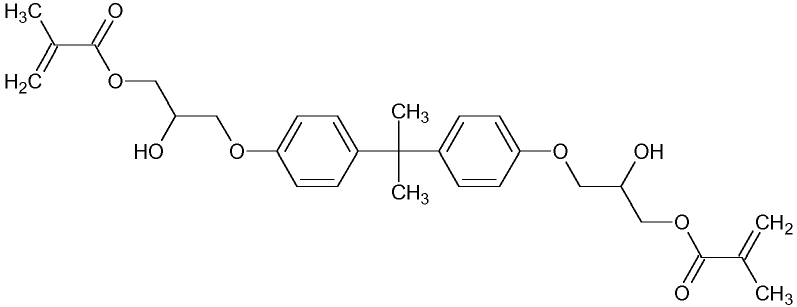 oder allgemeiner unter Berücksichtigung der Vorverlängeungsreaktion bei der Herstellung des Bisphenol-A-diglycidylethers der Formel 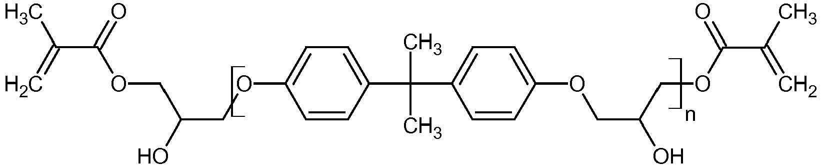 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich). Auch diese werden nachfolgend unter dem Begriff "Vinylester" subsumiert.

Beispiele für in besonderen Ausführungsformen der Erfindung vorhandene bzw. verwendete propoxylierte oder insbesondere ethoxylierte aromatische Diol-, wie Bisphenol-A-, Bisphenol-F- oder Novolak-(insbesondere di-)(meth)acrylate, sind solche der Formel 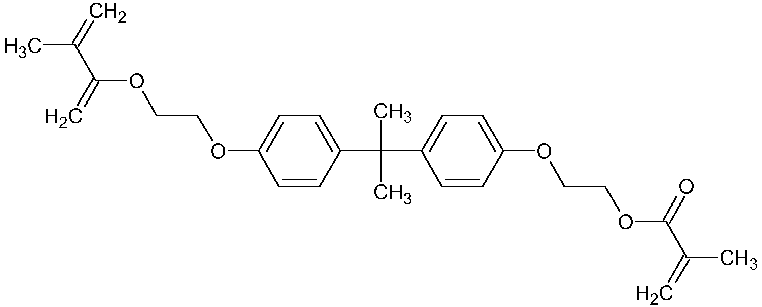 oder allgemein noch unter Berücksichtigung höherer Ethoxylierungsgrade: 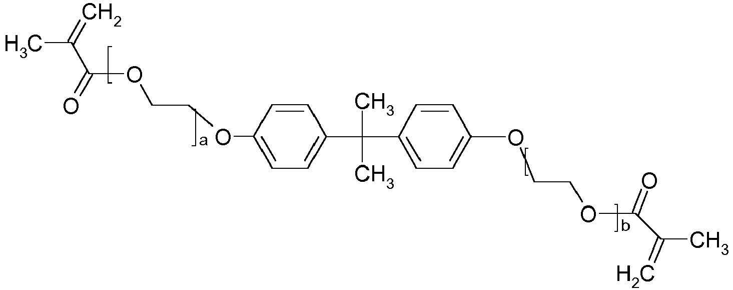 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich, für isoliert betrachtete Einzelmoleküle jeweils nur ganze Zahlen). Auch diese werden vor- und nachstehend unter dem Begriff "Vinylester" subsumiert.

Beispiele für in besonderen Ausführungsformen der Erfindung vorhandene bzw. verwendete Urethan(meth)acrylate sind solche, die einerseits aus der Umsetzung eines vorverlängerten monomeren Di- oder Polyisocyanats und/oder andererseits aus der Umsetzung eines polymeren Di- oder Polyisocyanats (z. B. PMDI, MDI und/oder MDI) mit Hydroxyethyl- oder Hydroxypropylmethacrylat resultieren. Die Art und Weise zur Durchführung von Vorverlängerungsreaktionen und die Vielzahl der Vorverlängerungsreaktionsmöglichkeiten sind dem Fachmann bekannt und werden hier nicht extra beschrieben. Es sei hier beispielhaft auf das Patent DE 4111828 A1 verwiesen.

Wo "(Meth)acrylate" oder -"(meth)acrylate" erwähnt werden, bedeutet dies Acrylate, Methacrylate oder Mischungen davon.

Wichtige Beispiele für weitere Inhaltsstoffe sind Beschleuniger, Inhibitoren, reaktive Verdünner, Thixotropiermittel, Füllstoffe und/oder weitere Additive.

Als Beschleuniger können sämtliche polaren Verbindungen in Frage kommen. Sowohl polar aprotische, als auch polar protische Verbindungen können einen beschleunigenden Effekt bewirken. Als Beispiele für polare Verbindungen als Beschleuniger, ohne sich auf diese beschränken zu wollen, seien hier: tertiäre, (insbesondere hydroxyalkylaminogruppensubstituierte) aromatische Amine, beispielsweise N,N-bis(hydroxypropyl- oder hydroxyethyl)-p-toluidin und auch höher alkoxylierte technische Produkte; aliphatische, heteroaliphatische, cycloaliphatische, cycloheteroaliphatische, araliphatische und heteroaraliphatische (vorzugsweise tertiäre) Amine erwähnt. Aufgrund der Vielzahl der beschleunigend wirkenden Amine werden als Beispiele nur ein kleiner Auszug genannt: N,N-Dimethylbenzylamin, N,N-Dimethylcyclohexylamin, Triethylamin, Triethanolamin, Tetraethylthiuramdisulfid, 2,4,6-Tris(dimethylaminomethyl)phenol. Ebenfalls als Beschleuniger können Verbindungen mit freien Elektronenpaaren wie beispielsweise DMSO, Triethylphosphat oder Triphenylphosphin verwendet werden.

Mischungen von zwei oder mehr Beschleunigern, insbesondere der genannten, sind möglich.

Außerdem können als polare Verbindungen, die beschleunigend wirken, sowohl basische Stoffe, wie NaOH, KOH, als auch vorzugsweise saure Stoffe (insbesondere, wenn die Verbindungen der Formel I als Salze eingesetzt werden), wie beispielsweise anorganische Säuren (z.B. Schwefelsäure, Phosphorsäure oder Salzsäure) oder organische Säuren (wie Monocarbonsäuren, z.B. ausgewählt aus Ameisensäure, Essigsäure und Benzoesäure,, Dicarbonsäuren, wie Oxalsäure, Malonsäure, Succinsäure, Adipinsäure, Pimelinsäure, Azelainsäure, Sebacinsäure, Maleinsäure, Fumarsäure, Sorbinsäure, Phthalsäure oder Terephthalsäure, Tricarbonsäuren, wie Hemimellithsäure, Trimellithsäure, Trimesinsäure, Agaricinsäure oder Zitronensäure, oder Sulfonsäuren, wie Methansulfonsäure oder Benzolsulfonsäure oder dergleichen, oder Mischungen von zwei oder mehr oder allen davon, eingesetzt werden. Mögliche Beschleuniger sind auch Lewis-Basen und Lewis-Säuren.

Ein oder mehrere derartiger Verbindungen sind möglich. Die Beschleuniger haben, vorzugsweise einen Anteil (Konzentration) von 0,005 bis 10, insbesondere von 0,1 bis 5 Gew.-%. Sie sind vorzugsweise im Falle der Säuren während der Lagerung getrennt von den CH-aciden Verbindungen aufbewahrt.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, (nicht-alkylierte oder alkylierte) Phenole, wie 4,4'-Methylen-bis(2,6-di-tert-butylphenol), (nicht-alkylierte oder alkylierte) Brenzcatechine wie tert.-Butylbrenzcatechin oder 3,5-Di-tert-butyl-1,2-benzoldiol, oder Gemische von zwei oder mehr davon, in Frage. Diese haben vorzugsweise einen Anteil von bis zu 1 Gew.-%, insbesondere zwischen 0,0001 und 0,5 Gew.-%, z.B. zwischen 0,01 und 0,1 Gew.-%.

Als nicht phenolische oder anaerobe (d.h. im Gegensatz zu den phenolischen Inhibitoren auch ohne Sauerstoff wirksame) Inhibitoren kommen vorzugsweise Phenothiazine oder andere stabile organische Radikale, wie Galvinoxyl- und N-oxyl-Radikale, in Betracht. Als organische Nitroxylradikale (insbesondere "HALS") können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetra-methylpiperidin-4-ol ("4-OH-TEMPO" oder "TEMPOL"). Der Gewichtsanteil der nicht-phenolischen Inhibitoren liegt vorzugsweise, bezogen auf die Reaktionsharzformulierung, im Bereich von 1 ppm (Gew.) bis 2 Gew.-%, insbesondere z.B. im Bereich von 10 ppm bis 1 Gew.-%.

Als Thixotropiermittel können übliche thixotropieverursachende Rheologiehilfsmittel verwendet werden, wie pyrogene Kieselsäure, Bentonite, Alkyl- und Methylcellulosen, Rizinusölderivate oder dergleichen. Sie können z.B. in einem Gewichtsanteil von 0,01 bis 50 Gew.-%, beispielsweise von 0,1 bis 5 Gew.-%, zugesetzt werden.

Auch weitere Additive können zugesetzt sein, wie Weichmacher, nicht reaktive Verdünnungsmittel, Flexibilisatoren, Stabilisatoren, Antistatikmittel, Verdickungsmittel, Härtungskatalysatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Derartige weitere Zusätze können vorzugsweise insgesamt in Gewichtsanteilen von insgesamt 0 bis 90 Gew.-%, beispielsweise von 0 bis 40 Gew.-%, zugesetzt sein. Sie können in einzelnen oder mehreren Komponenten bei Mehrkomponentensystemen in dem Fachmann ersichtlicher und bekannter Weise zugesetzt sein.

Als "reaktive Verdünner" für radikalisch härtende Reaktions- oder Kunstharze können zusätzlich auch ein oder mehrere (niedrigviskose) radikalisch härtende ungesättigte Reaktivverdünner zugesetzt sein, worunter in erster Linie solche zu verstehen sind, die radikalisch aushärtende (was "(z.B. vor Härterzugabe) aushärtbar" einschließt) organische Verbindungen mit ungesättigten (z.B. olefinischen) Resten beinhalten oder insbesondere aus solchen Verbindungen bestehen, z.B. insbesondere (Meth)Acrylat- oder (Meth)-Acrylamidmonomere, wie Acrylsäure und/oder Methacrylsäure oder vorzugsweise deren Ester (als (Meth)Acrylate bezeichnet) oder Amide, insbesondere (Meth)Acrylate, insbesondere der Formel (H₃C oder H)-C(=CH₂)-C(=O)-OX, worin X ein gegebenenfalls substituierter oder mehrfach substituierter Alkylrest mit 1 bis 12 Kohlenstoffatomen ist, wie Mono-, Di-, Tri-, oder Poly (meth)-acrylate (einschließlich Hydroxyalkyl(meth)acrylaten, wie Hydroxypropyl(meth)acrylat oder Hydroxyethyl(meth)acrylat, Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)acrylat wie 1,3- oder insbesondere 1,4-Butandioldi(meth)acrylat, Hexandioldi(meth)acrylat, Diethylglykoldi(meth)acrylat, Trimethylolpropantri(meth)acrylat, Glycerintri(meth)acrylat, Polyglycerinpoly(meth)acrylat, Polyethylenglykoldi(meth)acrylat, Cycloalkyl-, Bicycloalkyl- oder Heterocycloalkyl(meth)-acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Acetoacetoxyalkyl(meth)acrylat; oder ferner Styrole, wie Styrol, α-Methylstyrol, Vinyltoluol, tert.-Butylstyrol und/oder Divinylbenzol; oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-%.

Alkyl bedeutet vorzugsweise einen linearen oder ein- oder mehrfach verzweigten gesättigten (acyclischen) Kohlenwasserstoffrest mit bis zu 20 Kohlenstoffatomen, beispielsweise C₁-C₈-Alkyl, insbesondere C₁-C₄-Alkyl, wie insbesondere Methyl, Ethyl, n-Propyl, Isopropyl, n-Butyl, Isobutyl, tert-Butyl oder dergleichen. Wo C₁-C₄-Alkyl erwähnt wird, bezieht sich die Zahl 1-4 stets auf die Alkylgruppe selbst (und bezieht nicht angrenzende Molekülteile, wie z.B. - carbonyl oder-carbonylmethyl, mit ein).

Aryl bedeutet insbesondere einen ungesättigten cyclischen Kohlenwassertstoffrest mit konjugierten Doppelbindungen mit 6 bis 12 Kohlenstoffatomen, wie Phenyl oder Naphthyl.

Aralkyl bedeutet insbesondere einen über Alkyl wie oben definiert gebundenen Arylrest wie gerade definiert, insbesondere Benzyl oder Naphthylmethyl.

Cycloalkyl bedeutet insbesondere einen gesättigten cyclischen Kohlenwasserstoffrest mit 3 bis 10 Ringkohlenstoffatomen, wie Cycopropyl, Cyclobutyl, Cyclopentyl, Cyclohexyl oder Cycloheptyl.

Cycloalkylalkyl bedeutet insbesonddere einen über Alkyl wir oben definiert gebundenen Cycloalkylrest wie gerade definiert, insbesondere Cyclopentylmethyl oder Cyclohexylmethyl. Die Salze von Verbindungen der Formel I sind vorzugsweise Salze mit einwertigen oder zweiwertigen Salzen der Alkali- und Erdalkaliionen, beispielsweise die Natrium- oder Kaliumsalze. Sie können direkt bei der Herstellung der Verbindungen der Formel I anfallen oder nach üblichen Verfahren aus den CH-aciden Verbindungen der Formel I durch Umsetzung mit Basen, wie NaOH oder KOH, oder unter Verwendung von Ionenaustauschern hergestellt werden.

Bei den erfindungsgemäß als Radikalkettenstarter verwendeten CH-aciden Verbindungen der Formel I handelt es sich vorzugsweise um ein oder mehrere ausgewählt aus 2,4,6-Pyrimidintrionderivaten (im Rahmen der vorliegenden Offenbarung auch als Barbitursäurederivate bezeichnet, "Derivate" schließt jeweils Barbitursäure selbst mit ein)) (X = NR³, Y = NR⁶) und insbesondere aus Verbindungen, in denen X für eine Bindung oder für CR⁴R⁵ (dann also p = 1) oder für O und Y für CR⁷R⁸ (also q = 1) oder für O mit den zugehörigen oben definierten Bedingungen steht, wobei die übrigen Reste jeweils die genannten Bedeutungen haben.

Bevorzugte 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintrion) oder 2-Thiobarbitursäure (4,6-Dihydroxy-2-Mercaptopyrimidin).

Bevorzugte Verbindungen der Formel I, in denen -X- für eine Bindung oder für -CR⁴R⁵-(dann also p = 1) oder für O und Y für CR⁷R⁸ (also q = 1) oder für O steht (im Rahmen der vorliegenden Offenbarung bzw. in den nachfolgenden Beispielen auch als cyclische 1,3-Dioxoverbindungen bezeichnet), sind 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion oder 2,2,5-Trimethyl-1,3-dioxan-4,6-dion.

Bevorzugte Verbindungen der Formel I, worin das die Brücke bildende Glied -C(=Z³)- fehlt, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe, vorzugsweise für eine unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁-C₄-Alkylcarbonylmethylgruppe stehen (im Rahmen der vorliegenden Offenbarung bzw. in den nachfolgenden Beispielen auch als 1,3,5-Trioxoverbindungen bezeichnet),
R¹ und R² beide Wasserstoff bedeuten und
Z¹ und Z² die genannten Bedeutungen haben,
sind insbesondere 3-Oxoglutarsäure und deren Ester, wie 3-Oxoglutarsäuredimethylester, und/oder Diethyl-1,3-acetondicarboxylat.

Bevorzugte Verbindungen der Formel I, worin das die Brücke bildende Glied -C(=Z³)- fehlt, X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht,
Y und Z² gemeinsam mit dem bindenden Kohlenstoffatom -CN bedeuten, und
Z¹ die oben genannten Bedeutungen hat,
sind beispielsweise Ethylcyanoacetat, Methylcyanoacetat oder 2-Ethylhexylcyanoacetat.

Weiterhin bevorzugte Verbindungen sind Umsetzungsprodukte der Formel I (worin die Symbole -falls nicht anders definiert - die in der übrigen Offenbarung genannten Bedeutungen haben):
- in denen X für eine Bindung oder für CR⁴R⁵ (dann also p = 1) oder für O und Y für CR⁷R⁸ (also q = 1) oder für O steht; und/oder
- worin das die Brücke bildende Glied -C(=Z³)- fehlt, X und Y unabhängig voneinander für eine unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethyl-gruppe oder C₁-C₄-Alkylcarbonylmethylgruppe stehen; und/oder
- worin das die Brücke bildende Glied -C(=Z³)- fehlt, X für eine unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht, Y und Z² gemeinsam mit dem bindenden Kohlenstoffatom -CN bedeuten, Z¹ die oben für Formel I genannten Bedeutungen hat und
- R¹ und R² beide Wasserstoff bedeuten
mit gegenüber CH-aciden Verbindungen reaktiven Verbindungen, wie z.B.: zur Michael-Addition befähigte Verbindungen (z.B.: Acrylate), Isocyanate und Aldehyde wie beispielsweise in dem Paper: "Chemical reactions of polymer crosslinking and post crosslinking at room and medium temperature" von Guillaume Tillet, Bernard Bouttevin und Bruno Ameduri, oder dem Paper: "Applications for Acetoacetyl Chemistry in Thermoset Coatings" von F. Del Rector, W.W. Blount und D.R. Leonard, beschrieben. Weitere Reaktionen CHacider Verbindungen sind möglich, werden hier allerdings nicht explizit genannt. Beispiele für weitere Reaktionsmöglichkeiten finden sich in den oben genannten Papern, die hier durch Bezugnahme aufgenommen werden.

Durch die Umsetzungsreaktion wird bevorzugt ein Wasserstoff aus der zwischen den beiden Carbonylgruppen bzw. der zwischen der Carbonyl- und Cyanogruppe befindlichen Methylengruppe (A = -C(R¹)(R²))) ersetzt.

Bei den Aktivatoren in Form eines Metallsalzes, was auch Metallkomplexe und Metalloxide einschließt, verwendeten Komponenten handelt es sich vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Sekundäraktivatoren mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit CH₃, C₂-C₂₀-Alkyl, einem C₆-C₂₄Arylrest oder C₇-C₃₀-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mnacetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

Solche Verbindungen sind bekannt oder nach an sich bekannten Verfahren herstellbar, vgl. z.B. Lehrbuch der Lacke und Beschichtungen, Band III, 1976, Seiten 296-476 oder Ullmann, Encyclopädie der Chemie, Band 23, Seiten 421-424, 1979.

Sauerstoff muss für die Aushärtung nicht zugegen sein, kann jedoch gegebenenfalls die Auszugswerte steigern.

Der oder die (sonst auch als Trocknungsmittel bekannten) Aktivatoren liegen vorzugsweise in einem Anteil von 0,01 bis 20, z.B. 0,1 bis 5 Gew.-%, vor.

Füllstoffe können in einer oder in mehreren Komponenten beispielsweise einer erfindungsgemäßen oder erfindungsgemäß weiter verwendeten Kunstharzzusammensetzung, beispielsweise in Form eines Mehrkomponentenkits, beispielsweise einer oder beiden Komponenten eines entsprechenden Zweikomponentenkits, enthalten sein. Der Anteil an Füllstoffen, bezogen auf das Gesamtgewicht der härtbaren Masse, beträgt vorzugsweise 0 bis 80 Gew.-%, beispielsweise 5 bis 80, z.B. 40 bis 70 Gew.-%.

Als Füllstoffe finden übliche Füllstoffe, z.B. hydraulisch härtbare Füllstoffe, wie Gips, Branntkalk, Wassergläser oder insbesondere Zemente, wie Portlandzement oder Tonerdeschmelzzemente; mineralische oder mineralähnliche Füllstoffe, wie Kreiden, Sand, Gesteinsmehle, Quarz, Glas, Porzellan, Korund, Keramik, Silikate, Tone, Schwerspat, Aluminiumhydroxid, oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Mischungen von zwei oder mehr davon; wobei die Füllstoffe ferner oder insbesondere auch silanisiert sein können.

Wie erwähnt, betrifft eine Ausführungsform der Erfindung auch die Verwendung einer nach- und vorstehend beschriebenen CH-aciden Verbindung und eines Metallaktivators als Bestandteile eines erfindungsgemäßen oder erfindungsgemäß weiter verwendeten Härtersystems bzw. einer entsprechenden Härterzusammensetzung (mit gegebenenfalls bei Lagerung räumlich getrennten Bestandteilen a) und b)) zur Herstellung einer Kunstharzzusammensetzung, insbesondere als Härtersystem eines die erfindungsgemäßen oder erfindungsgemäß weiter verwendeten Kunstharzzusammensetzung beinhaltenden Mehrkomponentenkits, welches eingerichtet ist zum Befestigen von Verankerungselementen in Bohrlöchern, bzw. ein entsprechendes Herstellungsverfahren eines solchen Härtersystems, welche das Mischen der Bestandteile a) und b) vor Ort, gegebenenfalls in Gegenwart weiterer Inhaltsstoffe und dem Bestandteil c) beinhaltet.

Unter einem Mehrkomponentenkit (oder-set) ist insbesondere ein Zweikomponentenkit (vorzugsweise ein Zweikomponentenkit, vorzugsweise eine Zwei- oder ferner Mehrkammervorrichtung, zu verstehen, worin die miteinander reaktionsfähigen Bestandteile a), b) und c) so beinhaltet sind, dass sie während der Lagerung nicht zu unerwünschten Reaktionen führen können, vorzugsweise so, dass die Bestandteile a) und b) vor der Anwendung nicht miteinander in Berührung kommen. Möglich sind Patronen. Besonders geeignet sind jedoch Kartuschen oder Folienbeutel mit zwei oder mehr Kammern, oder Behältnisse wie Eimer oder Wannen mit mehreren Kammern oder Sets (z.B. Gebinde) von zwei oder mehr derartigen Behältnissen, wobei zwei oder mehr Komponenten der jeweiligen härtbaren Masse, insbesondere zwei Komponenten, jeweils räumlich voneinander getrennt als Kit oder Set vorliegen, bei denen der Inhalt nach Vermischen oder unter Vermischen auf die Anwendungsstelle (insbesondere mittels Geräten zum Auftragen wie Spachteln oder Pinseln oder eines Statikmischers), beispielsweise eine Fläche zum Befestigen von Fasern, Gelegen, Geweben, Composites oder dergleichen, oder in eine Aussparung, vorzugsweise ein Bohrloch, insbesondere zum Befestigen von Verankerungsmitteln wie Ankerstangen oder dergleichen, verbracht wird; sowie Mehr- oder insbesondere Zweikomponentenkartuschen, in deren Kammern die mehreren oder vorzugsweise zwei Komponenten für eine erfindungsgemäße oder erfindungsgemäß weiter verwendete Harzzusammensetzung insbesondere für Befestigungszwecke mit oben und nachstehend genannten Bestandteilen zur Aufbewahrung vor der Nutzung enthalten sind, wobei vorzugsweise auch ein Statikmischer zum entsprechenden Kit gehört. In den Fällen der Folienbeutel und der Mehrkomponentenkartuschen kann auch eine Vorrichtung zum Entleeren zum Mehrkomponentenkit gehören (beispielsweise eine Druckpistole), doch kann diese vorzugsweise auch (beispielsweise zur mehrfachen Verwendung) unabhängig vom Kit konfektioniert bzw. angeboten sein.

In einer Variante eines erfindungsgemäßen oder erfindungsgemäß weiter verwendeten Mehrkomponentenkits sind die Bestandteile a) und c) in einer Komponente (K1) beinhaltet, während Bestandteil b) in einer anderen (im Lagerzustand nicht mischbar separierten) Komponente (K2) beinhaltet ist, wobei jeweils optional ein oder mehrere weitere zusätzliche Inhaltsstoffe vorliegen können.

Bestandteil b) kann ebenfalls mit Bestandteil c) in einer Komponente beinhaltet sein, was jedoch weniger bevorzugt ist, da es zu Michael-Additionen kommen kann.
In einer Ausführungsform der Erfindung kann der Bestandteil c) in beiden Komponenten K1 und K2 vorliegen, während dann die Bestandteile a) und b) getrennt voneinander (im Lagerzustand nicht mischbar separiert) jeweils zu Bestandteil c) in die einzelnen Komponenten K1 bzw. K2 gegeben werden.

Alle Aufteilungen der Bestandteile a), b) und c) sind möglich, vorausgesetzt, dass a) und b) in getrennten Komponenten vorgesehen sind oder ferner wenigstens eine der beiden Bestandteile in mikroverkapselter Form vorgesehen ist.

Die Erfindung betrifft in weiteren zweckmäßigen Ausführungsformen auch die Verwendung einer erfindungsgemäßen oder erfindungsgemäß weiter verwendeten härtbaren Harzzusammensetzung, insbesondere in Form von Mehr-, insbesondere Zweikomponentenkits, zur Befestigung von Fasern, Gelegen, Geweben oder Composites, insbesondere aus hochmoduligen Fasern, vorzugsweise aus Glas-, Me-tall-, Stein-, Kunststoff- oder insbesondere Kohlefasern, insbesondere zur Verstärkung von Bauwerken, beispielsweise von Wänden oder Decken oder Böden (etwa zur Erhöhung der Erdbebensicherheit); oder ferner zur Befestigung von Bauteilen, wie Platten oder Blöcken, z.B. aus Stein, Glas oder Kunststoff, an Bauten oder Bauteilen; jedoch insbesondere zur Befestigung von Verankerungsmitteln, wie Ankerstangen, Bolzen oder dergleichen in Aussparungen, wie Bohrlöchern, wobei man die Komponenten des Mehrkomponentenkits nach vorherigem Mischen und/oder unter Mischen (beispielsweise mittels eines Statikmischers oder ferner durch Zerstören einer Patrone oder eines Folienbeutels oder durch Mischen von Komponenten aus mehrkammerigen Eimern oder Sets von Eimern) und auf die Oberfläche oder im Falle von Verankerungsmitteln in Aussparungen, wie Bohrlöcher, eines Substrates (z.B. Mauerwerk oder Beton, oder auch Holz, Metall oder ferner Kunststoff) verbringt.

Eine Variante der erfindungsgemäßen Verwendung sieht vor, dass die Bestandteile b) und c) in ein Bohrloch eingebracht werden, während die Ankerstange oder ferner ein anderes zu verklebendes Material in Bestandteil a) (beispielsweise eine derartige Metallsalzlösung) eingetaucht wird und dann in das mit b) und c) versehene Bohrloch eingebracht wird.
Unter Substrat (z.B. für Bohrlöcher) sind beispielsweise Materialien für Wände, Decken oder Böden im Baubereich zu verstehen, beispielsweise Mauerwerk, Beton, Holz, Metall oder ferner Kunststoff.

Parameter ("materialspezifische Eigenschaften"), soweit sie im Rahmen der vorliegenden Anmeldung dargestellt werden, werden nach dem Fachmann bekannten Verfahren insbesondere wie folgt ermittelt:
Für Auszugsversuche mit Gewindestangen M12 wird, gemäß ETAG 001 PART 5, wie folgt vorgegangen:
Zunächst werden Bohrlöcher (Durchmesser 14 mm; Tiefe 95 mm) in einen horizontal liegenden Betonprüfkörper (Betontyp C20/25) mit einem Bohrhammer und einem Hammerbohrer eingebracht. Die Bohrlöcher werden mit einem Handausbläser und einer Handbürste gereinigt. Anschließend werden die Bohrlöcher mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach 24 Stunden bei Raumtemperatur wird die Gewindestange gezogen bis zum Versagen unter Messung der Versagenslast.

Die Gelzeit wird von einer 30 g Mischung in einem Kunststoffbecher bei 23 °C mittels manuellem Umrühren bestimmt. Beim Erreichen des Gelierpunktes wird die zuvor flüssige Mischung hochviskos und gelartig, was sich u.a. durch Klumpenbildung bemerkbar macht. Zu diesem Zeitpunkt wird die nach dem Beginn der Prüfung gestartete Uhr gestoppt. Die Gelierzeit kann direkt abgelesen werden.

Der zulässige Temperaturbereich für das ausgehärtete Produkt kann ebenfalls durch Auszugsversuch nach Behandlung mit unterschiedlichen Temperaturen (beispielsweise 24 h Härtung bei Raumtemperatur, bei 50 °C und/oder bei 80 °C) bestimmt werden.

Die Erfindung betrifft auch die in den Ansprüchen, insbesondere den Unteransprüchen, aufgeführten Erfindungsgegenstände, weshalb die Ansprüche hier durch Bezugnahme aufgenommen werden.

Beispiele: Die nachfolgenden Beispiele dienen der Illustration der Erfindung, ohne ihren Umfang einzuschränken:

### Verwendete Abkürzungen:

- Mn 10: Octa-Soligen Manganese 10: Mangansalze der 2-Ethylhexansäure (Octoate) bzw. deren Isomeren; aktiver Inhalt: 10%; OMG Borchers GmbH, Langenfeld, Deutschland
- Mn 6: Octa-Soligen Manganese 6: Mangansalze der 2-Ethylhexansäure (Octoate) bzw. deren Isomeren; aktiver Inhalt: 6%; OMG Borchers
- Cu 8: Soligen Copper 8: Kupfersalze der 2-Ethylhexansäure (Octoate) und der Naphthensäuren; aktiver Inhalt: ∼ 8%; OMG Borchers
- CHD: 1,3-Cyclohexandion 50%ig in DMSO
- DMD: Dimedon 33%ig in DMSO
- ADCDME: 1,3-Acetondicarbonsäuredimethylester
- 1-PM-5-P-2,4,6-PT: 1-(Phenylmethyl)-5-Phenyl-2,4,6-Pyrimidintrion
- BDDMA: 1,4-Butandioldimethacrylat
- 2-HPMA: 2-Hydroxypropylmethacrylat
- PTE: N,N-bis(2-hydroxyethyl)-p-toluidin
- t-BBC: tert.-Butyl-Brenzcatechin

### Methacrylatharz:

| **Bezeichnung** | **Gew.-%** |
|---|---|
| Ethoxyliertes Bisphenol-A-Dimethacrylat" | 87,3 |
| BDDMA | 7,0 |
| 2-HPMA | 4,0 |
| PTE | 1,7 |

| | |
|---|---|
| * technisches Produkt. unterschiedliche Ethoxylierunggrade sind möglich | |

### Beispiel 1: Verwendung von cyclischen 1,3-Dioxoverbindungen und Manganaktivatoren als Härtersystem

Als Vertreter der cyclischen 1,3-Dioxoverbindungen wurden 1,3-Cyclohexandion und Dimedon in Kombination mit einem Manganaktivator, als Härtersystem für eine Kunstharzzusammensetzung, jeweils einem Auszugsversuch unterzogen.

### Folgende Rezepturen wurden verwendet:

| **Bezeichnung** | **CH-V036** | **CH-V039** |
|---|---|---|
| Methacrylatharz [g] | 22,62 | 22,62 |
| Dioxoverbindung [g] | 2,38 (CHD) | 3,57 (DMD) |
| Mn 10 [g] | 1,19 | 0,60 |
| Sand [g] | 52,38 | 54,76 |

Bei Verwendung der erfindungsgemäß verwendeten cyclischen Dioxoverbindungen kommt es in Kombination mit dem Manganaktivator zu einer schnell eintretenden exothermen Härtungsreaktion der Harzzusammensetzung. Zur besseren Verarbeitbarkeit wurden deshalb die Änderungen 1 und 2 vorgenommen:
1. Bei dem Versuch CH-V036 wurde dem Methacrylatharz der Beschleuniger PTE nicht zugesetzt.
2. Bei dem Versuch CH-V039 wurden dem Methacrylatharz 141 ppm t-BBC als Inhibitor zugesetzt.

Die Änderungen führen jeweils zu einer Erhöhung der Gelzeit auf etwa 3 Minuten, wodurch das Bohrloch problemlos befüllt und bestückt werden konnte.

Die Ergebnisse sind in der nachfolgenden Tabelle dargestellt:

| **Bezeichnung** | **Verbundspannung [N/mm2]** |
|---|---|
| CH-V036 | 17,3 |
| CH-V039 | 16,0 |

Das Beispiel 1 belegt, dass cyclische 1,3-Dioxoverbindungen zusammen mit Manganverbindungen/Manganaktivatoren als Härtersystem für radikalisch polymerisierbare Verbindungen geeignet sind.

### Beispiel 2: Verwendung von 1,3,5-Trioxoverbindungen und Manganaktivatoren als Härtersystem

Als Vertreter der 1,3,5-Trioxoverbindungen wurde ein 3-Oxoglutarsäureester (ADCDME) in Kombination mit einem Manganaktivator, als Härtersystem für eine Kunstharzzusammensetzung, Auszugsversuchen unterzogen, wobei folgende Rezepturen verwendet wurden:

| **Bezeichnung** | **CH-V056** | **CH-V058** | **CH-V068** | **CH-V071** |
|---|---|---|---|---|
| Methacrylatharz [g] | 22,62 | 24,36 | 20,65 | 22,35 |
| ADCDME [g] | 1,19 | 0,32 | 2,17 | 2,35 |
| Mn 10*¹/ Mn 6^{*2} [g] | 1,19*¹ | 0,32*¹ | 2,17*² | 0,29*² |
| Sand [g] | 50,00 | 50,00 | 50,00 | 50,00 |

mit den in der nachfolgenden Tabelle gezeigten Ergebnissen:

| **Bezeichnung** | **Verbundspannung [N/mm2]** |
|---|---|
| CH-V056 | 22,2 |
| CH-V058 | 19,7 |
| CH-V068 | 22,5 |
| CH-V071 | 18,1 |

Beispiel 2 zeigt die Verwendbarkeit von 1,3,5-Trioxoverbindungen in Kombination mit Manganaktivatoren als Härtersystem für Harzzusammensetzungen. Weiterhin zeigen die Rezepturen bzw. die ermittelten Verbundspannungen, dass sowohl die 1,3,5-Trioxoverbindung als auch die Manganverbindungen/Manganaktivatoren in weiten Bereichen variiert werden können, ohne dass dies zu einem signifikanten Abfall der Verbundspannung führt. Diese Robustheit des Härtersystems ist von großem Vorteil, da hierdurch Mischungsfehler/Anwendungsfehler ausgeglichen werden.

### Beispiel 3: Verwendung von 2,4,6-Pyrimidintrionderivate und Kupferaktivatoren als Härtersystem

Als Vertreter der 2,4,6-Pyrimidintrionderivate wurde 1-(Phenylmethyl)-5-Phenyl-2,4,6-Pyrimidintrion (1-PM-5-P-2,4,6-PT) in Kombination mit einem Kupferaktivator, als Härtsystem für eine Kunstharzzusammensetzung, ausgewählt und Auszugsversuchen unterzogen.

### Folgende Rezepturen wurden verwendet:

| Bezeichnung | CH-V076 | CH-V079 |
|---|---|---|
| Methacrylatharz [g] | 23,99 | 22,84 |
| 1-PM-5-P-2,4,6-PT [g] | 0,25 | 0,96 |
| Cu 8 [g] | 0,25 | 0,24 |
| Sand [g] | 50,00 | 50,00 |

Aufgrund der schnell eintretenden exothermen Härtungsreaktion wurden folgende Änderungen vorgenommen:
1. Bei beiden Versuchen (CH-V076 und CH-V079) wurde dem Methacrylatharz der Beschleuniger PTE nicht zugesetzt.
2. Bei dem Versuch CH-V076 wurde dem Methacrylatharz 100 ppm und bei dem Versuch CH-V079 200 ppm t-BBC zugesetzt.

Durch den fehlenden Beschleuniger und der Zugabe eines Inhibitors (t-BBC) - wie in den Änderungen 1 und 2 beschrieben - kann die Gelzeit auf etwa 2,5 Minuten erhöht und der Setzvorgang problemlos durchgeführt werden.

Die erhältlichen Verbundspannungen können der nachfolgenden Tabelle entnommen werden.

| Bezeichnung | Verbundspannung [N/mm²] |
|---|---|
| CH-V076 | 13,2 |
| CH-V079 | 17,6 |

Das Beispiel 3 belegt ebenfalls, dass 2,4,6-Pyrimidintrionderivate in Kombination mit Metallaktivatoren geeignet sind, um radikalische Polymerisationen zu initiieren und damit die Aushärtung eines Kunstharzes zu gewährleisten.

Aus den Verbundspannungen der Beispiele 1 - 3 geht hervor, dass neben cyclischen 1,3-Dioxo- und nichtcyclischen 1,3,5-Trioxoverbindungen auch 2,4,6-Pyrimidintrionderivate in Kombination mit Metallaktivatoren als Härtersystem für radikalisch polymerisierbare Verbindungen im Bereich der chemischen Befestigungssysteme verwendbar sind.

## Patentansprüche

1. Verwendung eines Härtersystems zur Herstellung einer Kunstharzzusammensetzung und Weiterverwendung der Kunstharzzusammensetzung zur Befestigung von Verankerungsmitteln in Substraten, wobei es sich bei dem Härtersystem um ein solches für eine Kunstharzzusammensetzung mit radikalisch polymerisierbaren Verbindungen handelt, welches die Bestandteile
a) mindestens einen Aktivator in Form eines Metallsalzes und
b) als Radikalkettenstarter mindestens eine CH-acide Verbindung der Formel I, 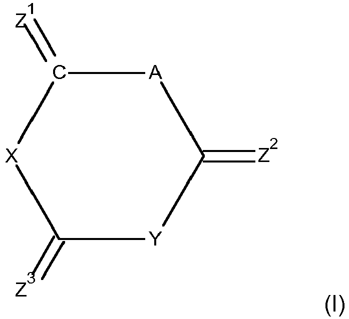 worin
(i)
-A-für-C(R¹)(R²)-steht
-X- für eine Bindung, für -NR³- oder für -(CR⁴R⁵)ₚ₋ steht, oder für -O- steht, Y für NR⁶ oder für (CR⁷R⁸)_{q} steht, oder für O steht,
wobei wenn X für O steht auch Y für O steht;
wobei vorzugsweise X für (CR⁴R⁵)ₚ steht und Y für CR⁷R⁸ steht,
oder X für NR³ und Y für NR⁶ steht;
Z¹ für O, S, S=O oder S(=O)₂ steht,
Z² für O, S, S=O oder S(=O)₂ steht,
Z³ für O, S, S=O oder S(=O)₂ oder für R⁹ und R¹⁰ steht,
p für 1, 2 oder 3 steht, vorzugsweise für 1 oder 2,
q für 1, 2 oder 3 steht, vorzugsweise für 1;
und die Reste R¹, R², R³, R⁴, R⁵, R⁶, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome aufweisen, mit der Maßgabe, dass mindestens einer der Reste R¹ und R² Wasserstoff bedeutet,
oder
(ii) offenkettige Verbindungen,
worin das die Brücke bildende Glied -C(=Z³)- fehlt,
-A- für -C(R¹)(R²)- steht,
X und Y unabhängig voneinander für eine jeweils unverzweigte oder verzweigte, unsubstituierte oder substituierte, gegebenenfalls Heteroatome aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe stehen,
R¹ und R² beide Wasserstoff bedeuten und
Z¹ und Z² die genannten Bedeutungen haben;
oder X für eine jeweils unverzweigte oder verzweigte, unsubstituierte oder substituierte, gegebenenfalls Heteroatome aufweisende C₁-C₄-Alkylgruppe oder C₁-C₄-Alkoxygruppe oder C₁-C₄-Alkoxycarbonylmethyl-gruppeoder C₁-C₄-Alkylcarbonylmethylgruppe steht,
Y und Z² gemeinsam mit dem bindenden Kohlenstoffatom -CN bedeuten,
Z¹ die oben genannten Bedeutungen hat; und
R¹ und R² jeweils wie oben definiert sind mit der Maßgabe, dass mindestens einer der Reste Wasserstoff bedeutet;
und/oder Salze davon,
beinhaltet.

2. Verwendung eines Härtersystems nach Anspruch 1, wobei es sich bei dem Aktivator a) um ein oder mehrere Metallsalze oder insbesondere Metallcarboxylate und/oder Metallcarbonate, oder insbesondere Salze von C₂-C₂₀-Carbonsäuren und/oder anorganischen Säuren mit Metallen, z.B. ausgewählt aus Kobalt, Zirkonium, Zink, Cer, Zinn, Wismuth oder vorzugsweise Vanadium, Mangan, Kupfer oder Eisen, oder Gemischen von zwei oder mehr davon, handelt, wobei die Carbonsäuren insbesondere gesättigt sind.

3. Verwendung eines Härtersystems nach einem der Ansprüche 1 oder 2, **dadurch gekennzeichnet, dass** es sich bei der CH-aciden Verbindung der Formel I um mindestens eine der in Anspruch 1 genannten Gruppe (i) handelt, oder ein Salz davon.

4. Verwendung eines Härtersystems nach einem der Ansprüche 1 oder 2, **dadurch gekennzeichnet, dass** es sich bei der CH-aciden Verbindung der Formel I um mindestens eine offenkettige Verbindung der in Anspruch 1 genannten Gruppe (ii) handelt, oder ein Salz davon.

5. Verwendung eines Härtersystems nach einem der Ansprüche 1 oder 2, **dadurch gekennzeichnet, dass** es sich bei der mindestens einen CH-aciden Verbindung b) um ein oder mehrere ausgewählt aus der Gruppe bestehend aus 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion, 2,2,5-Trimethyl-1,3-dioxan-4,6-dion;
Barbitursäure, 1-Benzyl-5-phenylbarbitursäure, 5-Butylbarbitursäure, 1-Cyclohexyl-5-ethylbarbitursäure, 2-Thiobarbitursäure;
Acetondicarbonsäuredimethylester, Diethyl-1,3-acetondicarboxylat;
Ethylcyanoacetat, Methylcyanoacetat und 2-Ethylhexylcyanoacetat;
und/oder jeweils einem Salz davon,
handelt.

6. Verwendung eines Härtersystems nach einem der Ansprüche 1 bis 5, frei von zugesetzten Peroxiden, Azoverbindungen oder Photoinitiatoren.

7. Härtersystem, für eine Kunstharzzusammensetzung mit radikalisch polymerisierbaren Verbindungen, welches die Bestandteile
a) mindestens einen Aktivator in Form eines Metallsalzes und
b) als Radikalkettenstarter mindestens eine CH-acide Verbindung der Formel I, 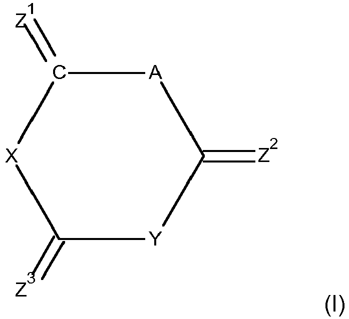 worin
(i)
-A- für -C(R¹)(R²)- steht
-X- für -(CR⁴R⁵)ₚ- steht,
Y für CR⁷R⁸ steht,
Z¹ für O, S, S=O oder S(=O)₂ steht,
Z² für O, S, S=O oder S(=O)₂ steht,
Z³ für O, S, S=O oder S(=O)₂ oder für R⁹ und R¹⁰ steht,
p für 1, 2 oder 3 steht, vorzugsweise für 1 oder 2,
q für 1, 2 oder 3 steht, vorzugsweise für 1;
und die Reste R¹, R², R⁴, R⁵, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome aufweisen, mit der Maßgabe, dass mindestens einer der Reste R¹ und R² Wasserstoff bedeutet, oder
(ii) offenkettige Verbindungen,
worin das die Brücke bildende Glied -C(=Z³)- fehlt,
-A- für -C(R¹)(R²)- steht,
X und Y unabhängig voneinander für eine jeweils unverzweigte oder verzweigte, unsubstituierte oder substituierte, gegebenenfalls Heteroatome aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe stehen,
R¹ und R² beide Wasserstoff bedeuten und
Z¹ und Z² die genannten Bedeutungen haben;
oder X für eine jeweils unverzweigte oder verzweigte, unsubstituierte oder substituierte, gegebenenfalls Heteroatome aufweisende C₁-C₄-Alkylgruppe oder C₁-C₄-Alkoxygruppe oder C₁-C₄-Alkoxycarbonylmethyl-gruppe oder C₁-C₄-Alkylcarbonylmethylgruppe steht,
Y und Z² gemeinsam mit dem bindenden Kohlenstoffatom -CN bedeuten,
Z¹ die oben genannten Bedeutungen hat; und
R¹ und R² jeweils wie oben definiert sind mit der Maßgabe, dass mindestens einer der Reste Wasserstoff bedeutet;
und/oder Salze davon,
beinhaltet,
wobei das Härtersystem frei ist von zugesetzten Peroxiden, Azoverbindungen oder Photoinitiatoren.

8. Härtersystem nach Anspruch 7, wobei es sich bei dem Aktivator a) um ein oder mehrere Metallsalze oder insbesondere Metallcarboxylate und/oder Metallcarbonate, oder insbesondere Salze von C₂-C₂₀-Carbonsäuren und/oder anorganischen Säuren mit Metallen, z.B. ausgewählt aus Kobalt, Zirkonium, Zink, Cer, Zinn, Wismuth oder vorzugsweise Vanadium, Mangan, Kupfer oder Eisen, oder Gemischen von zwei oder mehr davon, handelt, wobei die Carbonsäuren insbesondere gesättigt sind.

9. Härtersystem nach einem der Ansprüche 7 oder 8, **dadurch gekennzeichnet, dass** es sich bei der CH-aciden Verbindung der Formel I um mindestens eine der in Anspruch 7 genannten Gruppe (i) handelt, oder ein Salz davon.

10. Härtersystem nach einem der Ansprüche 7 oder 8, **dadurch gekennzeichnet, dass** es sich bei der CH-aciden Verbindung der Formel I um mindestens eine offenkettige Verbindung der in Anspruch 1 genannten Gruppe (ii) handelt, oder ein Salz davon.

11. Härtersystem nach einem der Ansprüche 7 oder 8, **dadurch gekennzeichnet, dass** es sich bei der mindestens einen CH-aciden Verbindung b) um ein oder mehrere ausgewählt aus der Gruppe bestehend aus 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion, 2,2,5-Trimethyl-1,3-dioxan-4,6-dion;
Acetondicarbonsäuredimethylester, Diethyl-1,3-acetondicarboxylat;
Ethylcyanoacetat, Methylcyanoacetat und 2-Ethylhexylcyanoacetat;
und/oder jeweils einem Salz davon,
handelt.

12. Kunstharzzusammensetzung, frei von zugesetzten Peroxiden, Azoverbindungen oder Photoinitiatoren, beinhaltend die Bestandteile
a) mindestens einen Aktivator in Form eines Metallsalzes
b) als Radikalkettenstarter mindestens eine CH-acide Verbindung der Formel I wie in Anspruch 7 definiert; und
c) mindestens eine radikalisch polymerisierbare Verbindung.

13. Kunstharzzusammensetzung nach Anspruch 12, wobei die radikalisch polymerisierbare Verbindung(en) c) ausgewählt ist oder sind aus härtbaren Estern mit ein oder mehreren ungesättigten Carbonsäureresten als veresterndem Rest, insbesondere aus Vinylestern und/oder Urethan(meth)acrylaten,
wobei es insbesondere sich bei dem Aktivator a) um ein oder mehrere Metallsalze oder insbesondere Metallcarboxylate und/oder Metallcarbonate, oder insbesondere Salze von C₂-C₂₀-Carbonsäuren und/oder anorganischen Säuren mit Metallen, z.B. ausgewählt aus Kobalt, Zirkonium, Zink, Cer, Zinn, Wismuth oder vorzugsweise Vanadium, Mangan, Kupfer oder Eisen, oder Gemischen von zwei oder mehr davon, handelt, wobei die Carbonsäuren insbesondere gesättigt sind, wobei es sich vorzugsweise bei der mindestens einen CH-aciden Verbindung b) um ein oder mehrere ausgewählt aus der Gruppe bestehend aus 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion, 2,2,5-Trimethyl-1,3-dioxan-4,6-dion; Acetondicarbonsäuredimethylester, Diethyl-1,3-acetondicarboxylat;
Ethylcyanoacetat, Methylcyanoacetat und 2-Ethylhexylcyanoacetat;
und/oder jeweils einem Salz davon, handelt;
wobei die Kunstharzzusammensetzung vorzugsweise frei von zugesetzten Peroxiden, Azoverbindungen oder Photoinitiatoren ist, und/oder in einem Mehrkomponentenkit vorliegt.

14. Verwendung einer Kunstharzzusammensetzung mit einem Härtersystem nach einem der Ansprüche 7 bis 13 als Klebstoff, Beschichtungsstoff oder Formmasse, insbesondere zur Befestigung von Verankerungsmitteln in Substraten, wie Mauerwerk oder Beton, oder zur Befestigung von Fasern, Gelegen, Geweben oder Composites zur Verstärkung von Bauwerken.

## Claims

1. Use of a hardener system for the production of a synthetic resin composition and further use of the synthetic resin composition for fixing anchoring means in substrates, wherein the hardener system is a hardener system for a synthetic resin composition containing free-radical-polymerisable compounds,
which system includes the constituents:
a) at least one activator in the form of a metal salt and
b) as free-radical chain starter, at least one CH-acid compound of the formula I 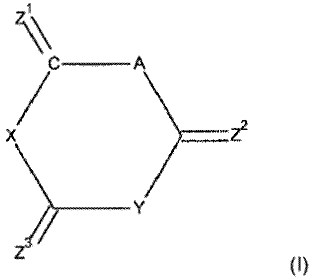 wherein
(i)
-A- denotes -C(R¹)(R²)-,
-X- denotes a bond, -NR³- or -(CR⁴R⁵)ₚ-, or denotes -O-,
Y denotes NR⁶ or (CR⁷R⁸)q, or denotes O,
wherein when X denotes O, Y also denotes O;
wherein preferably X denotes (CR⁴R⁵)ₚ and Y denotes CR⁷R⁸, or X denotes NR³ and Y denotes NR⁶;
Z¹ denotes O, S, S=O or S(=O)₂,
Z² denotes O, S, S=O or S(=O)₂,
Z³ denotes O, S, S=O or S(=O)₂ or denotes R⁹ and R¹⁰,
p denotes 1, 2 or 3, preferably 1 or 2,
q denotes 1, 2 or 3, preferably 1;
and the radicals R¹, R², R³, R⁴, R⁵, R⁶, R⁷, R⁸, R⁹ and R¹⁰ independently of one another denote hydrogen, alkyl, aryl, aralkyl, cycloalkyl or cycloalkylalkyl and are in each case unsubstituted or substituted and/or have hetero atoms, with the proviso that at least one of the radicals R¹ and R² is hydrogen,
or
(ii) open-chain compounds,
wherein the bridge-forming member-C(=Z³)- is absent,
-A- denotes -C(R¹)(R²)-,
X and Y each independently of the other denote an unbranched or branched, unsubstituted or substituted, optionally hetero-atom-containing C₁-C₄alkyl group or C₁-C₄alkoxy group or C₁-C₄alkoxycarbonylmethyl group or C₁-C₄alkylcarbonyl-methyl group,
R¹ and R² are both hydrogen and
Z¹ and Z² are as defined;
or X denotes an unbranched or branched, unsubstituted or substituted, optionally hetero-atom-containing C₁-C₄alkyl group or C₁-C₄alkoxy group or C₁-C₄alkoxycarbonylmethyl group or C₁-C₄alkylcarbonylmethyl group,
Y and Z² together with the bonding carbon atom are -CN,
Z¹ is as defined above; and
R¹ and R² are each as defined above, with the proviso that at least one of the radicals is hydrogen;
and/or salts thereof.

2. Use of a hardener system according to claim 1, wherein the activator a) is one or more metal salts or especially metal carboxylates and/or metal carbonates, or especially salts of C₂-C₂₀carboxylic acids and/or inorganic acids with metals, for example selected from cobalt, zirconium, zinc, cerium, tin, bismuth or preferably vanadium, manganese, copper or iron, or mixtures of two or more thereof, the carboxylic acids especially being saturated.

3. Use of a hardener system according to either one of claims 1 and 2, **characterised in that** the CH-acid compound of the formula I is at least one compound of the group (i) mentioned in claim 1, or a salt thereof.

4. Use of a hardener system according to either one of claims 1 and 2, **characterised in that** the CH-acid compound of the formula I is at least one open-chain compound of the group (ii) mentioned in claim 1, or a salt thereof.

5. Use of a hardener system according to either one of claims 1 and 2, **characterised in that** the at least one CH-acid compound b) is one or more compound(s) selected from the group consisting of 1,3-cyclohexanedione, 2-methyl-1,3-cyclohexanedione, 1,3-cyclopentanedione, 2-methyl-1,3-cyclopentanedione, 4,4-dimethyl-1,3-cyclohexanedione, 5,5-dimethyl-1,3-cyclohexanedione (dimedone), 2,2-dimethyl-1,3-dioxane-4,6-dione, 2,2,5-trimethyl-1,3-dioxane-4,6-dione; barbituric acid, 1-benzyl-5-phenylbarbituric acid, 5-butylbarbituric acid, 1-cyclohexyl-5-ethylbarbituric acid, 2-thiobarbituric acid;
acetone dicarboxylic acid dimethyl ester, diethyl-1,3-acetone dicarboxylate;
ethyl cyanoacetate, methyl cyanoacetate and 2-ethylhexyl cyanoacetate;
and/or in each case a salt thereof.

6. Use of a hardener system according to any one of claims 1 to 5, free of added peroxides, azo compounds or photoinitiators.

7. Hardener system, for a synthetic resin composition containing free-radical-polymerisable compounds, which system includes the constituents:
a) at least one activator in the form of a metal salt and
b) as free-radical chain starter, at least one CH-acid compound of the formula I 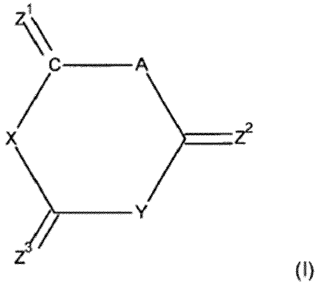 wherein
(i)
-A- denotes -C(R¹)(R²)-,
-X- denotes -(CR⁴R⁵)ₚ-,
Y denotes CR⁷R⁸,
Z¹ denotes O, S, S=O or S(=O)₂,
Z² denotes O, S, S=O or S(=O)₂,
Z³ denotes O, S, S=O or S(=O)₂ or denotes R⁹ and R¹⁰,
p denotes 1, 2, or 3, preferably 1 or 2,
q denotes 1, 2, or 3, preferably 1;
and the radicals R¹, R², R⁴, R⁵, R⁷, R⁸, R⁹ and R¹⁰ independently of one another denote hydrogen, alkyl, aryl, aralkyl, cycloalkyl or cycloalkylalkyl and are in each case unsubstituted or substituted and/or have hetero atoms, with the proviso that at least one of the radicals R¹ and R² is hydrogen,
or
(ii) open-chain compounds,
wherein the bridge-forming member-C(=Z³)- is absent,
-A- denotes -C(R¹)(R²)-,
X and Y each independently of the other denote an unbranched or branched, unsubstituted or substituted, optionally hetero-atom-containing C₁-C₄alkyl group or C₁-C₄alkoxy group or C₁-C₄alkoxycarbonylmethyl group or C₁-C₄alkylcarbonyl-methyl group,
R¹ and R² are both hydrogen and
Z¹ and Z² are as defined;
or X denotes an unbranched or branched, unsubstituted or substituted, optionally hetero-atom-containing C₁-C₄alkyl group or C₁-C₄alkoxy group or C₁-C₄alkoxycarbonylmethyl group or C₁-C₄alkylcarbonylmethyl group,
Y and Z² together with the bonding carbon atom are -CN,
Z¹ is as defined above; and
R¹ and R² are each as defined above, with the proviso that at least one of the radicals is hydrogen;
and/or salts thereof,
wherein the hardener system is free of added peroxides, azo compounds or photoinitiators.

8. Hardener system according to claim 7, wherein the activator a) is one or more metal salts or especially metal carboxylates and/or metal carbonates, or especially salts of C₂-C₂₀carboxylic acids and/or inorganic acids with metals, for example selected from cobalt, zirconium, zinc, cerium, tin, bismuth or preferably vanadium, manganese, copper or iron, or mixtures of two or more thereof, the carboxylic acids especially being saturated.

9. Hardener system according to either one of claims 7 and 8, **characterised in that** the CH-acid compound of the formula I is at least one compound of the group (i) mentioned in claim 7, or a salt thereof.

10. Hardener system according to either one of claims 7 and 8, **characterised in that** the CH-acid compound of the formula I is at least one open-chain compound of the group (ii) mentioned in claim 1, or a salt thereof.

11. Hardener system according to either one of claims 7 and 8, **characterised in that** the at least one CH-acid compound b) is one or more compound(s) selected from the group consisting of 1,3-cyclohexanedione, 2-methyl-1,3-cyclohexanedione, 1,3-cyclopentanedione, 2-methyl-1,3-cyclopentanedione, 4,4-dimethyl-1,3-cyclohexanedione, 5,5-dimethyl-1,3-cyclohexanedione (dimedone), 2,2-dimethyl-1,3-dioxane-4,6-dione, 2,2,5-trimethyl-1,3-dioxane-4,6-dione;
acetone dicarboxylic acid dimethyl ester, diethyl-1,3-acetone dicarboxylate;
ethyl cyanoacetate, methyl cyanoacetate and 2-ethylhexyl cyanoacetate;
and/or in each case a salt thereof.

12. Synthetic resin composition, free of added peroxides, azo compounds or photoinitiators, including the constituents:
a) at least one activator in the form of a metal salt,
b) as free-radical chain starter, at least one CH-acid compound of the formula I as defined in claim 7; and
c) at least one free-radical-polymerisable compound.

13. Synthetic resin composition according to claim 12, wherein the free-radical-polymerisable compound(s) c) is or are selected from curable esters having one more unsaturated carboxylic acid radicals as esterifying radical, especially selected from vinyl esters and/or urethane (meth)acrylates,
wherein, especially, the activator a) is one or more metal salts or especially metal carboxylates and/or metal carbonates, or especially salts of C₂-C₂₀carboxylic acids and/or inorganic acids with metals, for example selected from cobalt, zirconium, zinc, cerium, tin, bismuth or preferably vanadium, manganese, copper or iron, or mixtures of two or more thereof, the carboxylic acids especially being saturated; wherein, preferably, the at least one CH-acid compound b) is one or more compound(s) selected from the group consisting of 1,3-cyclohexanedione, 2-methyl-1,3-cyclohexanedione, 1,3-cyclopentanedione, 2-methyl-1,3-cyclopentanedione, 4,4-dimethyl-1,3-cyclohexanedione, 5,5-dimethyl-1,3-cyclohexane-dione (dimedone), 2,2-dimethyl-1,3-dioxane-4,6-dione, 2,2,5-trimethyl-1,3-dioxane-4,6-dione;
acetone dicarboxylic acid dimethyl ester, diethyl-1,3-acetone dicarboxylate;
ethyl cyanoacetate, methyl cyanoacetate and 2-ethylhexyl cyanoacetate;
and/or in each case a salt thereof;
wherein the synthetic resin composition is preferably free of added peroxides, azo compounds or photoinitiators, and/or is present in a multi-component kit.

14. Use of a synthetic resin composition with a hardener system according to any one of claims 7 to 13 as an adhesive, coating material or moulding composition, especially for fixing anchoring means in substrates, such as masonry or concrete, or for fixing fibres, non-crimp fabrics, woven fabrics or composites for reinforcement of built structures.

## Revendications

1. Utilisation d'un système durcisseur pour la fabrication d'une composition de résine artificielle et utilisation ultérieure de la composition de résine artificielle pour la fixation de moyens d'ancrage dans des substrats, le système durcisseur consistant en un système durcisseur pour une composition de résine artificielle comprenant des composés polymérisables par voie radicalaire, qui contient les constituants :
a) au moins un activateur sous la forme d'un sel métallique et
b) en tant que démarreur de chaîne radicalaire, au moins un composé à CH acide de la formule I, 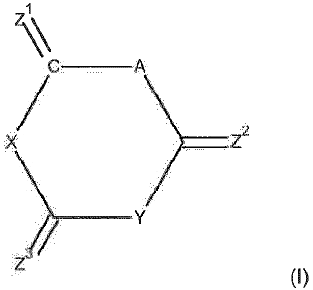 dans lequel
(i)
-A- représente -C(R¹)(R²)-,
-X- représente une liaison, -NR³- ou -(CR⁴R⁵)ₚ- ou -O-, Y représente NR⁶ ou (CR⁷R⁸) q ou O,
lorsque X représente 0, Y représentant également 0 ;
de préférence X représentant (CR⁴R⁵)ₚ et Y représentant CR⁷R⁸,
ou X représentant NR³ et Y représentant NR⁶ ;
Z¹ représente 0, S, S=O ou S(=O)₂,
Z² représente 0, S, S=O ou S(=O)₂,
Z³ représente O, S, S=O ou S (=O)₂ ou R⁹ et R¹⁰,
p représente 1, 2 ou 3, de préférence 1 ou 2,
q représente 1, 2 ou 3, de préférence 1 ;
et les radicaux R¹, R², R³, R⁴, R⁵, R⁶, R⁷, R⁸, R⁹ et R¹⁰ représentent indépendamment les uns des autres hydrogène, alkyle, aryle, aralkyle, cycloalkyle ou cycloalkylalkyle, et sont à chaque fois non substitués ou substitués et/ou comprennent des hétéroatomes, à condition qu'au moins un des radicaux R¹ et R² signifie hydrogène,
ou
(ii) des composés à chaîne ouverte,
dans lesquels l'élément -C(=Z³)- formant le pont est absent,
-A- représente -C(R¹)(R²)-,
X et Y représentent indépendamment l'un de l'autre un groupe alkyle en C₁-C₄ ou un groupe alcoxy en C₁-C₄ ou un groupe alcoxycarbonylméthyle en C₁-C₄ ou un groupe alkylcarbonylméthyle en C₁-C₄, à chaque fois non ramifié ou ramifié, non substitué ou substitué, comprenant éventuellement des hétéroatomes,
R¹ et R² signifient tous les deux hydrogène, et
Z¹ et Z² ont les significations indiquées ;
ou X représente un groupe alkyle en C₁-C₄ ou un groupe alcoxy en C₁-C₄ ou un groupe alcoxycarbonylméthyle en C₁-C₄ ou un groupe alkylcarbonylméthyle en C₁-C₄, à chaque fois non ramifié ou ramifié, non substitué ou substitué, comprenant éventuellement des hétéroatomes,
Y et Z² signifient conjointement avec l'atome de carbone qui les relie -CN,
Z¹ a les significations indiquées précédemment ; et
R¹ et R² sont à chaque fois tels que définis précédemment, à condition qu'au moins un des radicaux signifie hydrogène ;
et/ou leurs sels.

2. Utilisation d'un système durcisseur selon la revendication 1, dans laquelle l'activateur a) consiste en un ou plusieurs sels métalliques ou notamment carboxylates métalliques et/ou carbonates métalliques, ou notamment sels d'acides carboxyliques en C₂-C₂₀ et/ou d'acides inorganiques avec des métaux, p. ex. choisis parmi le cobalt, le zirconium, le zinc, le cérium, l'étain, le bismuth ou de préférence le vanadium, le manganèse, le cuivre ou le fer, ou des mélanges de deux ou plus d'entre eux, les acides carboxyliques étant notamment saturés.

3. Utilisation d'un système durcisseur selon l'une quelconque des revendications 1 ou 2, **caractérisée en ce que** le composé à CH acide de la formule I consiste en au moins un du groupe (i) indiqué dans la revendication 1, ou un sel de celui-ci.

4. Utilisation d'un système durcisseur selon l'une quelconque des revendications 1 ou 2, **caractérisée en ce que** le composé à CH acide de la formule I consiste en au moins un composé à chaîne ouverte du groupe (ii) indiqué dans la revendication 1, ou un sel de celui-ci.

5. Utilisation d'un système durcisseur selon l'une quelconque des revendications 1 ou 2, **caractérisée en ce que** ledit au moins un composé à CH acide b) consiste en un ou plusieurs choisis dans le groupe constitué par la 1,3-cyclohexane-dione, la 2-méthyl-1,3-cyclohexane-dione, la 1,3-cyclopentane-dione, la 2-méthyl-1,3-cyclopentane-dione, la 4,4-diméthyl-1,3-cyclohexane-dione, la 5,5-diméthyl-1,3-cyclohexane-dione (dimédone), la 2,2-diméthyl-1,3-dioxane-4,6-dione, la 2,2,5-triméthyl-1,3-dioxane-4,6-dione ;
l'acide barbiturique, l'acide 1-benzyl-5-phénylbarbiturique, l'acide 5-butylbarbiturique, l'acide 1-cyclohexyl-5-éthylbarbiturique, l'acide 2-thiobarbiturique ;
l'ester diméthylique de l'acide acétone-dicarboxylique, le 1,3-acétone-dicarboxylate de diéthyle ;
le cyanoacétate d'éthyle, le cyanoacétate de méthyle et le cyanoacétate de 2-éthylhexyle ;
et/ou à chaque fois un sel de ceux-ci.

6. Utilisation d'un système durcisseur selon l'une quelconque des revendications 1 à 5, exempt de peroxydes, composés azo ou photoinitiateurs ajoutés.

7. Système durcisseur, pour une composition de résine artificielle comprenant des composés polymérisables par voie radicalaire, qui contient les constituants :
a) au moins un activateur sous la forme d'un sel métallique et
b) en tant que démarreur de chaîne radicalaire, au moins un composé à CH acide de la formule I, 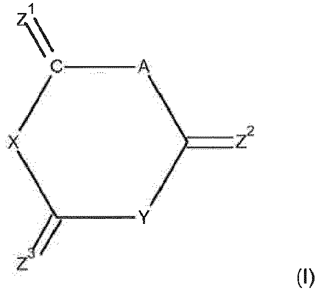 dans lequel
(i)
-A- représente -C(R¹)(R²)-,
-X- représente -(CR⁴R⁵)ₚ-,
Y représente CR⁷R⁸,
Z¹ représente 0, S, S=O ou S(=O)₂,
Z² représente 0, S, S=O ou S(=O)₂,
Z³ représente O, S, S=O ou S(=O)₂ ou R⁹ et R¹⁰,
p représente 1, 2 ou 3, de préférence 1 ou 2,
q représente 1, 2 ou 3, de préférence 1 ;
et les radicaux R¹, R², R⁴, R⁵, R⁷, R⁸, R⁹ et R¹⁰ représentent indépendamment les uns des autres hydrogène, alkyle, aryle, aralkyle, cycloalkyle ou cycloalkylalkyle, et sont à chaque fois non substitués ou substitués et/ou comprennent des hétéroatomes, à condition qu'au moins un des radicaux R¹ et R² signifie hydrogène,
ou
(ii) des composés à chaîne ouverte,
dans lesquels l'élément -C(=Z³)- formant le pont est absent,
-A- représente -C(R¹)(R²)-,
X et Y représentent indépendamment l'un de l'autre un groupe alkyle en C₁-C₄ ou un groupe alcoxy en C₁-C₄ ou un groupe alcoxycarbonylméthyle en C₁-C₄ ou un groupe alkylcarbonylméthyle en C₁-C₄, à chaque fois non ramifié ou ramifié, non substitué ou substitué, comprenant éventuellement des hétéroatomes,
R¹ et R² signifient tous les deux hydrogène, et
Z¹ et Z² ont les significations indiquées ;
ou X représente un groupe alkyle en C₁-C₄ ou un groupe alcoxy en C₁-C₄ ou un groupe alcoxycarbonylméthyle en C₁-C₄ ou un groupe alkylcarbonylméthyle en C₁-C₄, à chaque fois non ramifié ou ramifié, non substitué ou substitué, comprenant éventuellement des hétéroatomes,
Y et Z² signifient conjointement avec l'atome de carbone qui les relie -CN,
Z¹ a les significations indiquées précédemment ; et
R¹ et R² sont à chaque fois tels que définis précédemment, à condition qu'au moins un des radicaux signifie hydrogène ;
et/ou leurs sels,
le système durcisseur étant exempt de peroxydes, composés azo ou photoinitiateurs ajoutés.

8. Système durcisseur selon la revendication 7, dans lequel l'activateur a) consiste en un ou plusieurs sels métalliques ou notamment carboxylates métalliques et/ou carbonates métalliques, ou notamment sels d'acides carboxyliques en C₂-C₂₀ et/ou d'acides inorganiques avec des métaux, p. ex. choisis parmi le cobalt, le zirconium, le zinc, le cérium, l'étain, le bismuth ou de préférence le vanadium, le manganèse, le cuivre ou le fer, ou des mélanges de deux ou plus d'entre eux, les acides carboxyliques étant notamment saturés.

9. Système durcisseur selon l'une quelconque des revendications 7 ou 8, **caractérisé en ce que** le composé à CH acide de la formule I consiste en au moins un du groupe (i) indiqué dans la revendication 7, ou un sel de celui-ci.

10. Système durcisseur selon l'une quelconque des revendications 7 ou 8, **caractérisé en ce que** le composé à CH acide de la formule I consiste en au moins un composé à chaîne ouverte du groupe (ii) indiqué dans la revendication 1, ou un sel de celui-ci.

11. Système durcisseur selon l'une quelconque des revendications 7 ou 8, **caractérisé en ce que** ledit au moins un composé à CH acide b) consiste en un ou plusieurs choisis dans le groupe constitué par la 1,3-cyclohexane-dione, la 2-méthyl-1,3-cyclohexane-dione, la 1,3-cyclopentane-dione, la 2-méthyl-1,3-cyclopentane-dione, la 4,4-diméthyl-1,3-cyclohexane-dione, la 5,5-diméthyl-1,3-cyclohexane-dione (dimédone), la 2,2-diméthyl-1,3-dioxane-4,6-dione, la 2,2,5-triméthyl-1,3-dioxane-4,6-dione ;
l'ester diméthylique de l'acide acétone-dicarboxylique, le 1,3-acétone-dicarboxylate de diéthyle ;
le cyanoacétate d'éthyle, le cyanoacétate de méthyle et le cyanoacétate de 2-éthylhexyle ;
et/ou à chaque fois un sel de ceux-ci.

12. Composition de résine artificielle, exempte de peroxydes, composés azo ou photoinitiateurs ajoutés, contenant les constituants :
a) au moins un activateur sous la forme d'un sel métallique,
b) en tant que démarreur de chaîne radicalaire, au moins un composé à CH acide de la formule I tel que défini dans la revendication 7 ; et
c) au moins un composé polymérisable par voie radicalaire.

13. Composition de résine artificielle selon la revendication 12, dans laquelle le ou les composés polymérisables par voie radicalaire c) sont choisis parmi les esters durcissables contenant un ou plusieurs radicaux acides carboxyliques insaturés en tant que radical estérifiant, notamment parmi les esters de vinyle et/ou les (méth)acrylates d'uréthane,
dans laquelle l'activateur a) consiste notamment en un ou plusieurs sels métalliques ou notamment carboxylates métalliques et/ou carbonates métalliques, ou notamment sels d'acides carboxyliques en C₂-C₂₀ et/ou d'acides inorganiques avec des métaux, p. ex. choisis parmi le cobalt, le zirconium, le zinc, le cérium, l'étain, le bismuth ou de préférence le vanadium, le manganèse, le cuivre ou le fer, ou des mélanges de deux ou plus d'entre eux, les acides carboxyliques étant notamment saturés, dans laquelle ledit au moins un composé à CH acide b) consiste de préférence en un ou plusieurs choisis dans le groupe constitué par la 1,3-cyclohexane-dione, la 2-méthyl-1,3-cyclohexane-dione, la 1,3-cyclopentane-dione, la 2-méthyl-1,3-cyclopentane-dione, la 4,4-diméthyl-1,3-cyclohexane-dione, la 5,5-diméthyl-1,3-cyclohexane-dione (dimédone), la 2,2-diméthyl-1,3-dioxane-4,6-dione, la 2,2,5-triméthyl-1,3-dioxane-4,6-dione ;
l'ester diméthylique de l'acide acétone-dicarboxylique, le 1,3-acétone-dicarboxylate de diéthyle ;
le cyanoacétate d'éthyle, le cyanoacétate de méthyle et le cyanoacétate de 2-éthylhexyle ;
et/ou à chaque fois un sel de ceux-ci ;
dans laquelle la composition de résine artificielle est de préférence exempte de peroxydes, composés azo ou photoinitiateurs ajoutés, et/ou se présente dans un kit à plusieurs composants.

14. Utilisation d'une composition de résine artificielle comprenant un système durcisseur selon l'une quelconque des revendications 7 à 13 en tant qu'adhésif, matériau de revêtement ou matériau de moulage, notamment pour la fixation de moyens d'ancrage dans des substrats, tels que de la maçonnerie ou du béton, ou pour la fixation de fibres, de nappes, de tissus ou de composites pour le renforcement de bâtiments ou constructions.
